# FASCICULE DE BREVET EUROPEEN

(11) **EP 0 636 677 B1**
(45) Date de publication et mention de la délivrance du brevet: **06.10.1999**
(21) Numéro de dépôt: 94401690.6
(22) Date de dépôt: 21.07.1994
(51) Int. Cl.: C10G 45/60, B01J 37/20

(54) **Procédé d'isomérisation d'oléfines externes en oléfines internes conjointement à l'hydrogénation de dioléfines**
Verfahren zur Isomerierung von endstandigen Olefinen zu innenstandigen Olefinen mit gleichzeitiger Hydrierung von Diolefinen
Process for the isomerization of external olefins into internal olefins with concurrent hydrogenation of diolefins

(30) Priorité: 30.07.1993 FR 9309529
(43) Date de publication de la demande: 01.02.1995
(73) Titulaire: INSTITUT FRANCAIS DU PETROLE, 92502 Rueil-Malmaison (FR)
(72) Inventeur: Sarrazin, Patrick, F-92500 Rueil Malmaison (FR); Cameron, Charles, F-75005 Paris (FR); Boitiaux, Jean-Paul, F-78300 Poissy (FR); Dufresne, Pierre, F-26000 Valence (FR)

(56) Documents cités:
- FR-A- 2 627 104
- US-A- 3 290 404
- US-A- 4 132 745

## Description

La présente invention concerne un procédé d'hydrogénation sélective des dioléfines conjointement à l'isomérisation des oléfines externes en oléfines internes dans les coupes d'hydrocarbures liquides comme, par exemple, les coupes C₄ et C₅₊ de vapocraquage ou de craquage catalytique qui contiennent des composés dioléfiniques en mélange avec des oléfines. Pour pouvoir valoriser ces oléfines, il est nécessaire de les débarrasser des dioléfines par hydrogénation sélective. De plus, il est parfois avantageux d'isomériser les oléfines externes en oléfines internes qui peuvent présenter plus d'intérêt pour les procédés qui vont les utiliser en aval comme, par exemple, les unités d'alkylation ou d'étherification.

De tels traitements (hydrogénation sélective et isomérisation) sont effectués sur des catalyseurs à base d'au moins un métal du groupe VIII déposé sur support amorphe ou cristallin, on peut citer le palladium qui est d'usage courant.

Le brevet US 4,724,274 décrit un procédé de préparation de méthyl-2 butène-2 (oléfine interne) à partir d'une charge C₅ contenant le méthyl-2 butène-1 (oléfine externe) et au moins un n-pentène, avec un catalyseur à base d'un métal du groupe VIII et en présence d'un composé soufré dans la charge (H2S, thiol, thiophène...) à raison de 2 à 50 ppm. Il se produit une hydrogénation sélective des oléfines linéaires accompagnée d'une isomérisation du butène-1. Le procédé se déroule à une température comprise entre 60 et 120 °C et une pression entre 5 et 100 bars.

Cependant, ces catalyseurs au palladium n'isomérisent pas à un niveau suffisant les oléfines externes pour les procédés ci-dessus cités. Bien que les charges à traiter contiennent des traces de soufre, l'introduction d'un composé contenant du soufre sur le catalyseur chargé dans le réacteur (in situ) est parfois nécessaire avant sa mise en contact avec la charge réactive pour augmenter l'activité du métal.

Ainsi le brevet US-4, 132, 745 décrit l'isomérisation du butène-1 en butène-2 avec un catalyseur à base de métal noble qui a été sulfuré par H₂S.

Cette sulfuration (due à la présence de soufre dans la charge et/ou la sulfuration in situ du catalyseur), est cependant délicate à réaliser car il est nécessaire que le composé sulfuré soit très bien réparti sur l'ensemble du lit catalytique pour que l'on puisse effectivement obtenir un effet marqué sur la sélectivité. De plus cette procédure peut être longue et coûteuse ; elle se traduit par une perte de production ou peut être hasardeuse selon les composés soufrés que l'on manipule.

La demande de brevet FR-2,627,104 décrit la présulfuration ex-situ d'un catalyseur avec un composé particulier qui est un polysulfure contenant au moins 3 atomes de soufre et de masse molaire moyenne de 5000. La préparation de tels composés est complexe.

Plus précisèment, l'objet de l'invention est procédé d'isomérisation des oléfines externes contenues dans une charge en oléfines internes, ladite charge liquide contenant des dioléfines, en présence d'un catalyseur à base de palladium et en présence d'hydrogène, les conditions d'isomérisation du procédé correspondant à des températures comprises entre 20 et 200 °C, des pressions entre 1 et 50 bars, des VVH entre 0,5 et 10 h⁻¹ et le rapport molaire H₂/dioléfines étant compris entre 0,5 et 5, procédé dans lequel le catalyseur a été traité, avant son chargement dans le réacteur d'isomérisation, par au moins un composé soufré dilué dans un solvant, et que le catalyseur obtenu contenant 0,05 à 10 % de soufre (en poids) est chargé dans le réacteur et activé sous atmosphère neutre ou réductrice à une température comprise entre 20 et 300 °C, une pression comprise entre 1 et 50 bars et une VVH comprise entre 50 et 600 h⁻¹, et que la charge est mise au contact dudit catalyseur activé dans les conditions d'isomérisation.

Il a été maintenant découvert que, de façon surprenante, l'introduction de composés organiques contenant du soufre dans le catalyseur avant son chargement dans le réacteur, permet malgré une manipulation à l'air intermédiaire, une amélioration de l'activité isomérisante du catalyseur et permet également de s'affranchir de l'addition de composé soufré dans la charge.

Les composés utilisés peuvent être, sans que cela limite la validité de l'invention à ces seuls composés, des composés sulfurés et notamment des composés sulfurés organiques décomposables dans les traitements d'activation du catalyseur dans le réacteur. Ces activations sont faites sous atmosphères neutres ou réductrices à des températures comprises entre 20 et 300 °C et de préférence entre 60 et 210 °C, des pressions comprises entre 1 et 50 bars, et de préférence 3 à 20 bars, et un volume (m³) horaire de charge par m³ de catalyseur (VVH) compris entre 50 et 600 h⁻¹ et de préférence 100 à 200 h⁻¹.

Les composés organiques soufrés utilisables dans la présente invention sont en particulier les sulfures alkyles ou aryles organiques ou les sulfures alkylaryle ou arylalkyle organiques. On citera à titre d'exemples le butyléthylsulfure, le diallylsulfure, le dibutylsulfure, le dipropylsulfure, le thiophène, le diméthylthiophène et l'éthylthiophène.

On peut utiliser de façon plus générale les thiols (thioalcools, mercaptans, thiophénols) de formule R₁-SH où R₁ est un radical organique, les thioéthers de formule R₁-S-R₂, où R₁ et R₂ sont identiques ou différents, les disulfures organiques de formule R₁-S-S-R₂ et des disulfures du type HO-R₁-S-S-R₂-OH pris séparément ou en combinaison.

On peut également choisir un agent sulfuré organique choisi dans le groupe constitué par les thiodiazoles, les thioacides organiques, les thioamides, les thioesters, les thiophénols. On citera à titre d'exemple l'acide thiobenzoique, les thiocrésols, l'acide 3,3 thiodipropionitrile, le 2,3,6 triméthylthiophénol, le méthyl thioglycollate, le naphtalène 2-thiol, le phényl isothiocyanate, le 2 phényl thiophénol, le thioacétamide, le thiobenzamide, le 2,6 diméthyl thiophénol, le 3,5 diméthylthiophénol, le 2,2' dinitrodiphényl disulfure, la 2,5 dithiobiurée, l'éthyl thioglycollate, le 2-méthoxy thiophénol, le 3-méthoxy thiophénol.

L'invention peut être effectuée également en présence d'autres types d'additifs soufrés. On pourra ainsi citer les mercapto-alcools de formule : 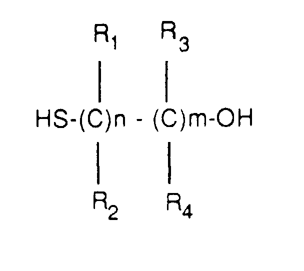 où n et m sont des nombres entiers, R₁, R₂, R₃, R₄, identiques ou différents sont des atomes d'hydrogène ou des radicaux organiques alkyle, aryle, aralkyle etc... ayant de 1 à 20 de préférence de 1 à 6 atomes de carbone par molécule de préférence n = 1-10 (exemple 1-2) et m = 1-10 (exemple 1).

On peut citer également les monothioglycols tel que le monothioéthylèneglycol, les dithioglycols tel que le dithiopropylène glycol, les dithiobenzènes tel que la dithiorésorcine, les hétérocycles substitués par des groupes mercapto tels que la mercaptopyridine, la mercaptopyrimidine etc..., les dihydroxyalkyle sulfures tel que le thiodiéthylène glycol (S(CH₂CH₂OH)₂), le thiodipropylène glycol etc..., les diaryl sulfures tel que le diphényl sulfure, les diaralkyl sulfures tel que le dibenzylsulfure, les thioéthers cycliques et leurs dérivés substitués (éthylène sulfure, thiophène, thiazole, thiopyrone, thioxanthone, thioxanthydrol, 1,4 thioxane etc...), les S alkyle éthers de hétérocycles substitués par des mercaptans (2- méthylthio 4,6 diamino pyrimidine etc...).

Parmi les familles des composés précédents, on citera plus particulièrement le diméthylsulfoxyde, l'éthylthiol éthanol, l'acide thio glycolique, le dithioglycol et les disulfures organiques de formule notamment HO-R₁-S-S-R₂-OH comme indique plus haut ou HO-(CH₂)ₓ-S-(CH₂)_{x'}-S-(CH₂)_{x''}-OH où R₁ et R₂ sont définis comme précédemment, où x, x', x'', identiques ou différents sont un nombre entier.

On peut citer plus particulièrement à titre d'exemple le diéthanol disulfure ou 2,2 dithio bis éthanol (D.E.O.D.S.) de formule HO-C₂H₄-S-S-C₂H₄-OH soluble notamment dans l'eau, les glycols et les polyglycols.

On peut également utiliser un polysulfure de formule R-Sn-R' où n est un nombre entier de 3 à 20 atomes de préférence de 4 à 8 et plus particulièrement de 5 à 7, R et R', identiques ou différents, représentent des radicaux organiques renfermant chacun 1 à 150 atomes des carbone par molécule, de préférence soit 10 à 60 atomes carbone soit 5 à 40 atomes de carbone et plus particulièrement 7 à 16, ces radicaux étant choisis dans le groupe constitué par les radicaux alkyles, c'est-à-dire saturés ou insaturés, linéaires ou ramifiés ou de type naphténique, les radicaux aryles, les radicaux alkylaryles et les radicaux arylalkyles, ces divers radicaux pouvant comporter au moins un hétéroatome. R' éventuellement peut également être un atome d'hydrogène.

On peut citer, à titre d'exemple préféré de polysulfure, le ditertiododécylpolysulfure (n = 5) où R et R' sont chacun un radical tertio-dodécyle.

Ce produit est commercialisé par exemple par ELF AQUITAINE sous le nom de TPS 32 notamment parce qu'il contient 32 % poids de soufre. On peut citer également le ditertiononylpolysulfure (n = 5) où R et R' sont chacun un radical tertio-nonyle.

L'agent de prétraitement est utilisé, dilué dans un solvant adéquat qui dépend notamment de la nature de l'agent de sulfuration. Le solvant choisi peut être un des solvants suivants utilisés seuls ou en mélange :
· une essence légère bouillant par exemple entre environ 60 et 95 °C,
· une essence de type hexane bouillant entre 63 et 68 °C environ,
· une essence de type F bouillant entre environ 100 et 160 °C et contenant généralement 10 à 20 % d'hydrocarbures aromatiques, par exemple 15 %, en volume,
· une essence de type "White spirit" bouillant entre environ 150 et 250 °C et renfermant généralement 14 à 22 % d'hydrocarbures aromatiques, par exemple 17 % en volume,
· ou toute coupe hydrocarbonée ou non, équivalente aux essences précédentes.

L'agent peut être utilisé dans un autre solvant tel que, par exemple, les alcools (méthanol, éthanol, propanol, etc...), les aldéhydes, les cétones, les éthers, des esters, les alcools, polyalcools, acides et polyacides, les glycols. Ces composés peuvent également jouer le rôle de réducteur. Un autre solvant possible est l'eau.

Après avoir été imprégné le catalyseur est avantageusement soumis à un traitement thermique, généralement entre 100 et 200°C.

Dans la présente invention on incorporera avantageusement dans le catalyseur 0,05 % à 10 % et de préférence 0,2 % à 1 % de soufre exprimé en poids de soufre par rapport à la masse de catalyseur.

Le catalyseur contient généralement 0,02 à 2% poids de palladium, de préférence 0,05 à 1%, et avantageusement 0,05 à 0,5%.

Le catalyseur présulfuré ainsi obtenu est ensuite activé dans le réacteur avant introduction de la charge. La réaction d'isomérisation a lieu à une pression comprise entre 1 et 50 bars (5 à 30 bars préféré), une température entre 20 et 200 °C (50 à 150 °C préféré) et une VVH comprise entre 0,5 et 10 h⁻¹ (1 à 6 h⁻¹ préféré), le rapport H₂/oléfines (molaire) étant compris entre 0,5 et 5 (et de préférence 1 à 3).

Les exemples suivants illustrent l'invention sans en limiter l'application.

### EXEMPLE 1 : (comparaison)

On dispose de 100 cm³ de catalyseur LD 265 de la Société Procatalyse (noté catalyseur A ci-après) contenant 0,3 % poids de palladium supporté sur alumine dans un tube d'acier de 3 cm de diamètre. Ce catalyseur utilisé couramment pour l'hydrogénation sélective des coupes C₄ de vapocraquage ou de FCC est activé selon le mode opératoire suivant :
· Sulfuration dans le réacteur sous un mélange gazeux H₂/H₂S (1 % volume d'H₂S) à un débit de 30 l/h pendant 6 heures à 150°C.
· Réduction sous hydrogène à un débit de 30 l/h pendant 5 heures à 200°C.

On refroidit ensuite le catalyseur sous débit d'hydrogène puis on purge l'installation à l'azote.

On mesure ensuite l'activité hydrogénante et isomérisante du catalyseur avec une charge hydrocarbonée dont la composition est présentée dans le tableau 1 suivant :

| | **Teneur (% poids)** |
|---|---|
| **Isobutane** | 30,0 |
| **Butane** | 10,0 |
| **Butène-2 trans** | 17,0 |
| **Butène-1** | 14,0 |
| **Isobutène** | 15,7 |
| **Butène-2 cis** | 13,0 |
| **Butadiène-1,3** | 0,3 |

Cette charge est passée en flux ascendant avec de l'hydrogène à travers le lit de catalyseur dans les conditions suivantes :
· Pression = 25 bar
· Température
· Débit de coupe C₄ = 1000 cm³/h
· Rapport molaire H₂/Butadiène-1,3 = 2,2

Les effluents du réacteur sont analysés par chromatographie en phase vapeur à l'aide d'une colonne alumina plot de 50 m. Les résultats obtenus sont présentés dans le tableau 2 suivant :

| | **Teneur (% poids)** |
|---|---|
| **Isobutane** | 30,0 |
| **Butane** | 10,36 |
| **Butène-2 trans** | 23,36 |
| **Butène-1** | 6,08 |
| **Isobutène** | 15,7 |
| **Butène-2 cis** | 14,50 |
| **Butadiène-1,3** | 0 |

Il apparaît que dans ces conditions le catalyseur A donne une conversion du butadiène-1,3 de 100 % et un taux d'isomérisation du butène-1 de 56,6 %. Le rendement en oléfines est de 99,4 %.

### EXEMPLE 2 : (selon l'invention)

On dispose de 100 cm³ de catalyseur LD 265 de la Société Procatalyse contenant 0,3 % poids de palladium supporté sur alumine. On imprègne à sec ce catalyseur avec une solution aqueuse d'acide formique à 2.2 mole par litre et de diéthoxydisulfure à 0.15 mole par litre. On sèche le catalyseur imprégné pendant 6 heures à 120°C. Ce catalyseur est appelé catalyseur B. On le dispose dans un tube d'acier de 3 cm de diamètre et on l'active selon le mode opératoire suivant :
· Réduction sous hydrogène à un débit de 30 l/h pendant 5 heures à 200°C.

On refroidit ensuite le catalyseur sous débit d'hydrogène puis on purge l'installation à l'azote.

On mesure ensuite l'activité hydrogénante et isomérisante du catalyseur avec une charge hydrocarbonée dont la composition est présentée dans le tableau 1 de l'exemple 1.

Cette charge est passée en flux ascendant avec de l'hydrogène à travers le lit de catalyseur dans les conditions opératoires décrites dans l'exemple 1.

Les effluents du réacteur sont analysés par chromatographie en phase vapeur à l'aide d'une colonne alumina plot de 50 m. Les résultats obtenus sont présentés dans le tableau 3 suivant :

| | **Teneur (% poids)** |
|---|---|
| **Isobutane** | 30,0 |
| **Butane** | 10,36 |
| **Butène-2 trans** | 23,76 |
| **Butène-1** | 5,66 |
| **Isobutène** | 15,7 |
| **Butène-2 cis** | 14,52 |
| **Butadiène-1,3** | 0 |

Il apparaît que dans ces conditions le catalyseur B donne des performances supérieures à celles présentées dans l'exemple 1 avec le catalyseur A. En effet, la conversion du butadiène-1,3 est de 100 % et l'isomérisation du butène-1 de 59,6 %. Le rendement en oléfines reste de 99,4 %.

## Revendications

1. Procédé d'isomérisation des oléfines externes contenues dans une charge en oléfines internes, ladite charge liquide contenant des dioléfines, en présence d'un catalyseur à base de palladium et en présence d'hydrogène, les conditions d'isomérisation du procédé correspondant à des températures comprises entre 20 et 200°C, des pressions entre 1 et 50 bars, des VVH entre 0,5 et 10 h⁻¹ et le rapport molaire H₂/dioléfines étant compris entre 0,5 et 5, procédé caractérisé en ce que le catalyseur a été traité, avant son chargement dans le réacteur d'isomérisation, par au moins un composé soufré dilué dans un solvant, ledit composé soufré étant choisi dans le groupe constitué par les sulfures alkyles ou aryles organiques, les sulfures alkyalryles ou arylalkyles organiques, les thiols, les thiodiazoles, les thioacides organiques, les thioamides, les thioesters, les thiophénols, les mercapto-alcools, les monothiolglycols, thioéthers de formule R₁-S-R₂, où R₁ et R₂ sont identiques ou différents, les disulfures organiques de formule R₁-S-S-R₂, et des disulfures du type HO-R₁-S-S-R₂-OH, et que le catalyseur obtenu contenant 0,05 à 10% de soufre (en poids) est chargé dans le réacteur et activé sous atmosphère neutre ou réductrice à une température comprise entre 20 et 300 °C, une pression comprise entre 1 et 50 bars et une VVH comprise entre 50 et 600 h⁻¹, et que la charge est mise au contact dudit catalyseur activé dans les conditions d'isomérisation.

2. Procédé selon la revendication 1, caractérisé en ce que la charge est choisie dans le groupe formé par une coupe C₄ de vapocraquage, une coupe C₅₊ de vapocraquage, une coupe C₄ de craquage catalytique et une coupe C₅₊ de craquage catalytique.

3. Procédé selon l'une des revendications précédentes, caractérisé en ce que le catalyseur est constitué par du palladium déposé sur de l'alumine.

4. Procédé selon l'une des revendications précédentes, caractérisé en ce que le solvant est choisi dans le groupe formé par les essences et les coupes hydrocarbonées.

5. Procédé selon l'une des revendications précédentes, caractérisé en ce que le solvant est choisi dans le groupe formé par les alcools, les aldéhydes, les cétones, les éthers, les esters, les polyalcools, les acides, les polyacides, les glycols.

6. Procédé selon l'une des revendications précédentes, caractérisé en ce que le solvant est l'eau.

7. Procédé selon l'une des revendications précédentes, caractérisé en ce que l'activation est conduite entre 60 et 210 °C, à une pression de 3 à 20 bars et une VVH de 100 à 200 h⁻¹.

8. Procédé selon l'une des revendications précédentes, caractérisé en ce que l'isomérisation est conduite entre 50 et 150 °C, à une pression de 5 à 30 bars, une VVH de 1 à 6 h⁻¹, et un rapport H₂/dioléfines (molaire) de 1 à 3.

9. Procédé selon l'une des revendications précédentes, caractérisé en ce que le traitement avant chargement dans le réacteur est réalisé avec du diéthoxydisulfure.

10. Procédé selon l'une des revendications précédentes, caractérisé en ce que le catalyseur renferme 0,2 à 1 % de soufre (en poids).

11. Procédé selon l'une des revendications précédentes, caractérisé en ce que le catalyseur renferme 0,02 à 0,2% poids de palladium.

12. Procédé selon l'une des revendications précédentes, caractérisé en ce que le catalyseur renferme 0,05 à 1% en poids de palladium.

13. Procédé selon l'une des revendications précédentes, caractérisé en ce que le catalyseur renferme 0,05 à 0,5% en poids de palladium.

## Patentansprüche

1. Verfahren zur Isomerisierung von äußeren Olefinen, die in einer Diolefine enthaltenden flüssigen Beschickung von inneren Olefinen enthalten sind, in Gegenwart eines Katalysators auf Basis von Palladium und in Gegenwart von Wasserstoff, wobei die Isomerisierungs-Bedingungen des Verfahrens Temperaturen zwischen 20 und 200°C, Drucken zwischen 1 und 50 bar, stündlichen Raumgeschwindigkeiten (VVH) zwischen 0,5 und 10 h⁻¹ und H₂/Diolefin-Molverhältnissen zwischen 0,5 und 5 entsprechen,
dadurch gekennzeichnet, daß der Katalysator vor seiner Einführung in den Isomerisierungs-Reaktor mit mindestens einer, in einem Lösungsmittel verdünnten schwefelhaltigen Verbindung behandelt worden ist, wobei die genannte schwefelhaltige Verbindung ausgewählt worden ist aus der Gruppe, die besteht aus organischen Alkylsulfiden oder Arylsulfiden, organischen Alkylaryl-sulfiden oder Arylalkylsulfiden, Thiolen, Thiodiazolen, organischen Thiosäuren, Thioamiden, Thioestern, Thiophenolen, Mercaptoalkoholen, Monothiolglycolen, Thioethern der Formel R₁-S-R₂, worin R₁ und R₂ identisch oder verschieden sind, organischen Disulfiden der Formel R₁-S-S-R₂ und Disulfiden vom Typ HO-R₁-S-S-R₂-OH, und daß der erhaltene Katalysator, der 0,05 bis 10 Gew.-% Schwefel enthält, in den Reaktor eingeführt und aktiviert wird unter einer neutralen oder reduzierenden Atmosphäre bei einer Temperatur zwischen 20 und 300°C, einem Druck zwischen 1 und 50 bar und einer stündlichen Raumgeschwindigkeit (VVH) zwischen 50 und 600 h⁻¹_{,} und daß die Beschickung mit dem genannten aktivierten Katalysator unter den Isomerisierungs-Bedingungen in Kontakt gebracht wird.

2. Verfahren nach Anspruch 1, dadurch gekennzeichnet, daß die Beschikkung ausgewählt wird aus der Gruppe, die besteht aus einer C₄-Dampfcrackungs-Fraktion, einer C₅₊-Dampfcrackungs-Fraktion, einer katalytischen C₄-Crackungs-Fraktion und einer katalytischen C₅₊-Crackungs-Fraktion.

3. Verfahren nach einem der vorhergehenden Ansprüche, dadurch gekennzeichnet, daß der Katalysator besteht aus Palladium, das auf Aluminiumoxid abgeschieden worden ist.

4. Verfahren nach einem der vorhergehenden Ansprüche, dadurch gekennzeichnet, daß das Lösungsmittel ausgewählt wird aus der Gruppe, die besteht aus Benzinen und Kohlenwasserstoff-Fraktionen.

5. Verfahren nach einem der vorhergehenden Ansprüche, dadurch gekennzeichnet, daß das Lösungsmittel ausgewählt wird aus der Gruppe, die besteht aus Alkoholen, Aldehyden, Ketonen, Ethern, Estern, Polyalkoholen, Säuren, Polysäuren und Glycolen.

6. Verfahren nach einem der vorhergehenden Ansprüche, dadurch gekennzeichnet, daß das Lösungsmittel Wasser ist.

7. Verfahren nach einem der vorhergehenden Ansprüche, dadurch gekennzeichnet, daß die Aktivierung zwischen 60 und 210°C bei einem Druck von 3 bis 20 bar und einer VVH von 100 bis 200 h⁻¹ durchgeführt wird.

8. Verfahren nach einem der vorhergehenden Ansprüche, dadurch gekennzeichnet, daß die Isomerisierung zwischen 50 und 150°C bei einem Druck von 5 bis 30 bar, einer VVH von 1 bis 6 h⁻¹ und einem H₂/Diolefin-Molverhältnis von 1 bis 3 durchgeführt wird.

9. Verfahren nach einem der vorhergehenden Ansprüche, dadurch gekennzeichnet, daß die Behandlung vor der Einführung in den Reaktor mit Diethoxydisulfid durchgeführt wird.

10. Verfahren nach einem der vorhergehenden Ansprüche, dadurch gekennzeichnet, daß der Katalysator 0,2 bis 1 Gew.-% Schwefel enthält.

11. Verfahren nach einem der vorhergehenden Ansprüche, dadurch gekennzeichnet, daß der Katalysator 0,02 bis 0,2 Gew.-% Palladium enthält.

12. Verfahren nach einem der vorhergehenden Ansprüche, dadurch gekennzeichnet, daß der Katalysator 0,05 bis 1 Gew.-% Palladium enthält.

13. Verfahren nach einem der vorhergehenden Ansprüche, dadurch gekennzeichnet, daß der Katalysator 0,05 bis 0,5 Gew.-% Palladium enthält.

## Claims

1. Process for the isomerisation of external olefins contained in a feedstock to internal olefins, said liquid feedstock containing diolefins, in the presence of a palladium based catalyst and in the presence of hydrogen, the isomerisation conditions of the process corresponding to a temperature of between 20°C and 200°C, a pressure of between 1 and 50 bars, a VVH of between 0.5 and 10 h⁻¹ and an H₂/diolefin molar ratio of between 0.5 and 5, characterised in that the catalyst is treated, before being loaded into the isomerisation reactor, with at least one sulphur-containing compound dissolved in a solvent, said sulphur-containing compound being selected from the group constituted by organic alkyl or aryl sulphides, organic alkylaryl or arylalkyl sulphides, thiols, thiodiazoles, organic thioacids, thioamides, thioesters, thiophenols, mercapto-alcohols, monothioglycols, thioethers with the formula R₁-S-R₂ where R₁ and R₂ are identical or different, organic disulphides with the formula R₁-S-S-R₂ and HO-R₁-S-S-R₂₋-OH type disulphides, and in that the catalyst obtained, containing 0.05 % to 10 % by weight of sulphur, is loaded into the reactor and activated in a neutral or reducing atmosphere at a temperature of between 20°C and 300°C, a pressure of between 1 and 50 bars and a VVH of between 50 and 600 h⁻¹, and in that the feedstock is brought into contact with said activated catalyst under isomerisation conditions.

2. Process according to claim 1, characterised in that the feedstock is selected from the group formed by a C₄ steam cracking cut, a C₅₊ steam cracking cut, a C₄ catalytic cracking cut and a C₅₊ catalytic cracking cut.

3. Process according to any one of the preceding claims, characterised in that the catalyst is constituted by palladium deposited on alumina

4. Process according to any one of the preceding claims, characterised in that the solvent is selected from the group formed by petrols and hydrocarbon cuts.

5. Process according to any one of the preceding claims, characterised in that the solvent is selected from the group formed by alcohols, aldehydes, ketones, ethers, esters, polyalcohols, acids, polyacids and glycols.

6. Process according to any one of the preceding claims, characterised in that the solvent is water.

7. Process according to any one of the preceding claims, characterised in that activation is carried out between 60°C and 210°C, at a pressure of 3 to 20 bars and a VVH of 100 to 200 h⁻¹.

8. Process according to any one of the preceding claims, characterised in that isomerisation is carried out between 50°C and 150°C, at a pressure of 5 to 30 bars, a VVH of 1 to 6 h⁻¹ and an H₂/olefin molar ratio of 1 to 3.

9. Process according to any one of the preceding claims, characterised in that the treatment before loading into the reactor is effected using diethoxydisulphide.

10. Process according to any one of the preceding claims, characterised in that the catalyst contains 0.2 % to 1 % by weight of sulphur.

11. Process according to any one of the preceding claims, characterised in that the catalyst contains 0.02 % to 2 % by weight of palladium.

12. Process according to any one of the preceding claims, characterised in that the catalyst contains 0.05 % to 1 % by weight of palladium.

13. Process according to any one of the preceding claims, characterised in that the catalyst contains 0.05 % to 0.5 % by weight of palladium.
